# EUROPEAN PATENT APPLICATION

(11) **EP 4 120 547 A1**
(43) Date of publication of application: **18.01.2023**
(21) Application number: 21382764.5
(22) Date of filing: 17.08.2021
(51) Int. Cl.: H02P 3/22, H02P 9/00, H02P 9/10, H02P 25/022, H02P 29/024, H02P 29/028

(54) **A WIND POWER FACILITY AND METHOD**

(30) Priority: 14.07.2021 EP 21382637
(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

The DFIG wind power facility for operating during grid faults is provided. The DFIG wind power facility comprises a DFIG Generator, a control system, an electric converter, a short-circuit controlled switch, a controlled grid switch for selectively coupling/decoupling at least the stator and the grid; and a braking system. The generator comprises a rotor and a stator having at least one three-phase winding. The converter comprises a Machine Side Converter (MSC), a Grid Side Converter (GSC) and a DC link. The braking system comprises at least one brake chopper module (BCM) per phase, the at least one BCM configured to selectively allow current flow bidirectionally. The BCM comprises an impedance unit and a switching unit connected in parallel thereto configured to vary the average value of the impedance unit. The short-circuit controlled switch is configured to selectively short-circuit at least the stator upon detecting a grid fault thereby allowing current to flow at least through the stator and the impedance unit.

## Description

### FIELD OF THE INVENTION

The present invention relates to wind power facilities and methods for operating, more specifically to DFIG wind power facilities and methods for operating during grid faults.

### BACKGROUND

Grid faults such as Low Voltage Ride Though (LVRT), voltage dip, voltage drop, grid loss, etc.; may seriously affect the operation of a wind power facility. Upon detection of a grid fault, the operation of the wind power facility may usually need to be suddenly changed which require sudden and fast operation change.

The wind power facility needs to quickly adapt to a new operating mode to face unexpected events such as grid faults, but furthermore, need to be configured to promptly return back to normal operation mode upon ceasing of the event.

Known methods in DFIG turbines focus on reducing the energy production by slowing down the rotor by braking and/or using the pitch control to modify the blade orientation to reduce the wind impact surface. Thus, all the kinetic energy is dissipated through mechanical components thereby introducing high mechanical loads and stresses into the wind power facility. Consequently, the lifetime of the facility is reduced and/or the risk of failure increases. In addition, in order to stand such mechanical stresses the mechanical components should be stronger, which involves higher costs.

In conclusion, there is a need to provide a DFIG wind power facility with optimized performance during grid faults which increases the efficiency in a cost-effective way while at the same time enables a safe operation.

### SUMMARY OF THE INVENTION

In a first aspect, a DFIG wind power facility configured to operate during grid faults is provided. The DFIG wind power facility comprises a Doubly-Fed Induction Generator (DFIG), a control system configured to manage the operation of the DFIG wind power facility, an electric converter, a short-circuit controlled switch , a controlled grid switch for selectively coupling/decoupling at least the stator and the grid; and a braking system. The Doubly-Fed Induction Generator comprises a rotor and a stator, wherein the stator comprises at least one three-phase winding. The electric converter comprises a Machine Side Converter (MSC), a Grid Side Converter (GSC) and a DC link connected therebetween. The braking system comprises at least one brake chopper module (BCM) per phase, the at least one BCM configured to selectively allow current flow bidirectionally, and wherein the BCM comprises an impedance unit and a switching unit connected in parallel thereto, the switching unit being configured to vary the average value of the impedance unit. The short-circuit controlled switch is configured to selectively short-circuit at least the stator upon detecting a grid fault thereby allowing current to flow at least through the stator and the impedance unit of the at least one BCM during the grid fault.

The use of the at least one BCM may enable bypassing the energy produced by the blades to mitigate the mechanical transients that appear during a grid fault. Thus, the lifetime of the wind power facility may be extended or at least prevented from a premature wear.

The flux variation on the stator due to voltage transients may cause large overcurrent and/or overvoltage that may lead to lose the control of the wind power facility. The addition of at least one BCM enhances the control over the wind power facility and enables controlling the torque.

The use of an impedance unit enables dissipating the power extracted from the wind and which cannot be introduced into the grid, e.g. due to a voltage dip, as the current that was previously circulating towards the grid can flow through the impedance. The stator may thus generate reactive power in despite a grid fault, and therefore, a sudden operation change, i.e. the use of a mechanical braking to suddenly stop the wind power facility operation; is not needed. The energy generation capacity of the stator may thus be maintained.

In case of a voltage dip, the impedance unit enables a quick damping of the flux variations in the stator thereby reducing the overvoltage and/or overcurrent in the rotor at the beginning of the dip. The control over the wind power facility may thus be improved and/or made easier (when compared to preexisting prior art devices) as the voltage and current do not suffer big oscillations.

In addition, the use of a switching unit enables varying the average value of the impedance unit e.g. by adapting the duty cycle of the switching unit. Therefore, the energy dissipated by the impedance unit may be adjusted and/or adapted according to ongoing circumstances. Indeed, the switching unit enables the impedance unit to switch from null value to a nonnull value very fast e.g. in micro-seconds, thereby achieving a modulable impedance average value.

Moreover, by being able to vary the average value of the impedance unit, a controlled electromagnetic torque may be obtained e.g. during a voltage dip. The generator speed may therefore not suffer big oscillations which may be useful for further improving or facilitating the control of the wind power facility.

In addition, varying the average value of the impedance unit may increase the adaptability of the wind power facility as enables taking into account the specific features e.g. the depth of the LVRT, the length of the LVRT, etc. because the energy to be dissipated may be adapted to the features of the on-going event. As a result, the electromagnetic torque during a grid event, e.g. a dip, may be almost constant and therefore the DFIG wind power facility may, upon recovery of nominal grid voltage value, be able to deliver the reference power to the grid almost as fast as a full converter wind power facility. A more versatile wind power facility may thus be obtained.

The use of a short-circuit controlled switch enables short-circuiting at least the stator thereby enabling a continuous flow of the electrical energy through the stator during a grid fault. Moreover, the wind power facility may not need to be suddenly slowed down i.e. may continue almost under normal operation, which facilitates the return to normal operation after ceasing of the grid fault.

In an example, the short-circuit controlled switch may be an electromechanical switch or an electronic switch. An electronic switch may provide a quicker switching, e.g. in micro-seconds, if compared with electromechanical switches. Alternatively, the electromechanical switches are more efficient and cheaper than electronic ones.

In an example, the switching unit may comprise at least one active element. Such at least one active element may be e.g. an IGBT, a RB-IGBT, a Si MOSFET, a SiC MOSFET, any other suitable element or a combination thereof.

By having at least one active element, its duty cycle may be adapted or changed, e.g. by the control system, thereby varying the average value of the impedance unit. The power dissipated by the impedance unit may thus be adjusted to the ongoing conditions.

In an example, the switching unit may comprise a passive element e.g. a diode, a RB diode, SiC diode or any other suitable element.

In an example, the DFIG wind power facility may comprise two or more BCMs per phase, wherein the two or more BCMs may be connected in parallel therebetween, therefore the power level may be increased and the costs may be optimized. That is, instead of having a massive and costly component for a certain power level, a plurality of smaller devices, i.e. BCMs, may be used. For achieving higher power levels, more BCMs may be added, the scalability of the braking system is therefore also improved.

In an example, the braking system may be arranged at the stator neutral point and the generator may be in star connection.

When short-circuiting the stator, the DFIG wind power facility may mimic the operation of a Full Converter (FC) during grid faults. FC wind power facilities are known to be more mechanic friendly i.e. avoid and/or prevent excessive mechanical loads during grid fault and also have enhanced ability to recover the normal operation after the grid event i.e. grid fault. Therefore, when the grid fault ceases, the nominal energy production may be reached faster, and the wind power facility may recover the normal DFIG operation mode in a cost-effective way.

By providing a DFIG wind power that may under certain circumstances, i.e. during grid faults, be configured to behave as a FC, the efficiency of the wind power facility may be increased as it may not be necessary to drastically modify the normal functioning of the wind power facility. Moreover, a DFIG wind power facility has a lower manufacturing costs than a FC wind facility, and therefore, by configuring the DFIG wind power facility to operate during grid faults, some advantages of FC may be obtained but avoiding high manufacturing costs of a FC facility.

Furthermore, as the rotor of the wind power facility may be slowed down via power dissipation, mechanical stresses added by the mechanic braking system may be prevented, the lifetime of the wind power facility may therefore be increased.

In addition, the at least one BCM and the short-circuit controlled switch may easily be installed e.g. in already operating turbines.

The use of a short-circuit controlled switch may enable operating the DFIG as motor which enables rotating the blades in absence of wind which may be useful e.g. for maintenance tasks and also to facilitate the erection of the wind power facility e.g. for placing the blades in place. When closing the short-circuit controlled switch energy may be taken from the grid through GSC.

Furthermore, arranging the braking system in the stator neutral point may enable selecting the phase(s) under an asymmetrical fault condition e.g. in examples having a triphasic current, therefore, the braking system is more precise as it allows selecting specific BCN(s) to better tackle the faults.

In an example, the braking system may be arranged between the common coupling point (CCP) and the grid.

By having the braking system between the CCP and the grid enables better addressing or tackling the LVRT events.

In addition, no energy storage system may be required which substantially reduces the costs. And furthermore, such arrangement of the braking system is retro compatible and requires no modification of the wind power facility leading to an easy, cheap and fast implementation.

In an example, a stator switch may be arranged between the stator and the CCP for selectively connecting/disconnecting the stator from the CCP. The generator may thus, upon opening the stator switch, be energized.

In an example, the braking system may be arranged in series which may reduce the implementation costs.

In an example, the braking system may be arranged in parallel. In such examples, the braking system may further comprise at least one activating switch per phase for selectively allowing current flow through the at least one BCM.

By using an activation switch per phase, the power losses during normal operation are avoided as the activating switch(es) may disconnect respective braking system phase from the grid. Thus, no power loss occurs and the braking system and/or the wind power facility are more efficient.

In an example, the DFIG wind power facility may further comprise an Energy Storage System (ESS) in the DC link which enables storing the energy produced during grid faults. Thus, upon restoring the grid connection, the energy may be injected into the grid preventing the loss of the generated power. Additionally, the variability of the power injected to the grid may be substantially reduced as the power injected may not depend on the wind transients. In addition, the power injected to the grid may be limited to a preestablished maximum value e.g. during transient events. The preestablished value may depend on the grid requirements and the capability of the wind power facility.

Moreover, the use of an ESS enables reducing the mechanical loads in case of variable winds as it enables operating under constant torque in the generator and constant power in the grid. The lifetime of the wind power facility may thus be extended.

Besides, the ESS may provide an additional electromagnetic torque that can balance the input mechanical torque e.g. during grid transients, such electromagnetic torque being generated absorbing the energy harnessed from the wind and storing it in the ESS.

The use of ESS may allow operating the DFIG as motor in case of grid loss as the stored energy may be used to move the rotor. The maintenance operations may be carried out in case of grid loss.

In an example, the ESS may be connected in parallel to the DC link capacitor which prevents losing control over the wind power facility as at sub-synchronous speed, the power flowing into the rotor is provided by the ESS; and at supersynchronous speed, the ESS may absorb the generated power before it reaches the Grid Side Converter thereby supporting the control of the wind power facility and avoiding losing such generated energy that can be injected into the grid after the event.

In a further aspect, a method for shutting down a DFIG wind power facility according to any of the disclosed examples in case of a grid fault, e.g. a grid loss, in a controlled manner is provided.

Firstly, the grid connection is monitored. Upon detecting a grid loss, the short-circuit controlled switch is closed and the controlled grid switch is opened (thereby decoupling at least the stator from the grid) . The pitch of the plurality of blades is increased. The switching unit of the at least one BCM is then activated and the impedance may thus dissipate the power from the stator. The rotor speed may thus be progressively and/or gradually reduced without requiring sudden braking which introduces mechanical loads.

The rotor speed is measured and a predetermined DC or AC current is injected into the rotor thereby adapting the rotor frequency. The rotor is measured and, upon measuring a rotational rotor speed below a predetermined shutdown speed e.g. about 50 - 100 rpm for a generator having a synchronous speed about 1500 rpm, the short-circuit controlled switch is opened.

By using such a method a secure shutdown of the wind power facility may be achieved while mechanical loads may be (substantially) reduced the as the speed of the rotor may be gradually or progressively decreased i.e. the use of a mechanic braking system (which introduces high mechanical loads into the wind power facility components) is avoided.

The lifetime of the wind power facility may thus be extended and the maintenance tasks reduced.

### BRIEF DESCRIPTION OF THE FIGURES

The forgoing and other features and advantages of the invention will become further apparent from the following detailed description read in conjunction with the accompanying drawings. In the drawings, like reference numerals refer to like elements.
Figures 1A schematically illustrates a DFIG wind power facility according to an example;
Figures 1B schematically illustrates a DFIG wind power facility according to an example;
Figures 2 schematically illustrates the DFIG wind power facility of Fig. 1A in more detail;
Figures 3 schematically illustrates a DFIG wind power facility according to an example;
Figure 4 schematically illustrates a flow diagram of a method for operating a DFIG wind power facility during grid loss according to an example;
Figure 5 schematically illustrates a flow diagram of a method for operating a DFIG wind power facility during LVRT according to an example;
Figures 6 schematically illustrates a DFIG wind power facility according to an example;
Figure 7 schematically illustrates a flow diagram of a method for operating a DFIG wind power facility during LVRT according to an example; and
Figure 8 schematically illustrates a flow diagram of a method for operating a DFIG wind power facility as motor according to an example.

### DETAILED DESCRIPTION

The term "wind power facility" shall be understood as a wind turbine or as a plurality of wind turbines.

The term "connected/coupled to the grid" shall be understood as either a direct connection of a wind power facility and the electrical grid, or, in case of a wind power facility located at a wind farm an indirect connection.

The terms "connected" and "coupled" shall be considered synonyms and are interchangeably used herein. Similarly, the terms "disconnected" and "uncoupled" shall be considered synonyms and are interchangeably used herein.

The term "Grid Side Converter (GSC)" shall be understood as the part of an electric converter facing or coupled to an electrical grid. Such connection may be direct or have an intermediate device e.g. a common coupling point of several wind power facilities of a wind farm which centralizes the contributions of a plurality of facilities.

The term "normal operation" shall be understood as the usual running of a wind power facility in absence of unexpected events such as grid faults.

The term "grid fault" shall be understood as a plurality of electric phenomena e.g. voltage dip, grid loss, etc., that may affect the normal functioning of a wind power facility.

The term "Low Voltage Ride Though (LVRT)" shall be understood as the generator capability to stay connected during a short period of low electric network voltage.

The term "voltage dip or voltage drop" shall be understood as a short duration abrupt reduction of grid voltage.

The term "grid loss" shall be understood as a sudden decoupling of the wind power facility from the grid.

The term "circuit branch" shall be understood as an electrical path between two circuit nodes wherein each branch may comprise a single element or a plurality of elements arranged in series.

The term "duty cycle of a switching unit" shall be understood as the ratio of time a switching unit e.g. comprising at least an active element, is switched on compared to the time that switching unit is switched off. The variation of the duty cycle of a switching unit may comprise varying the duty cycle of at least one active element comprised therein. The variation of the switching frequency and/or of the duration of each pulse of the switching unit may enable changing and/or adapting the average value of an impedance unit connected thereto.

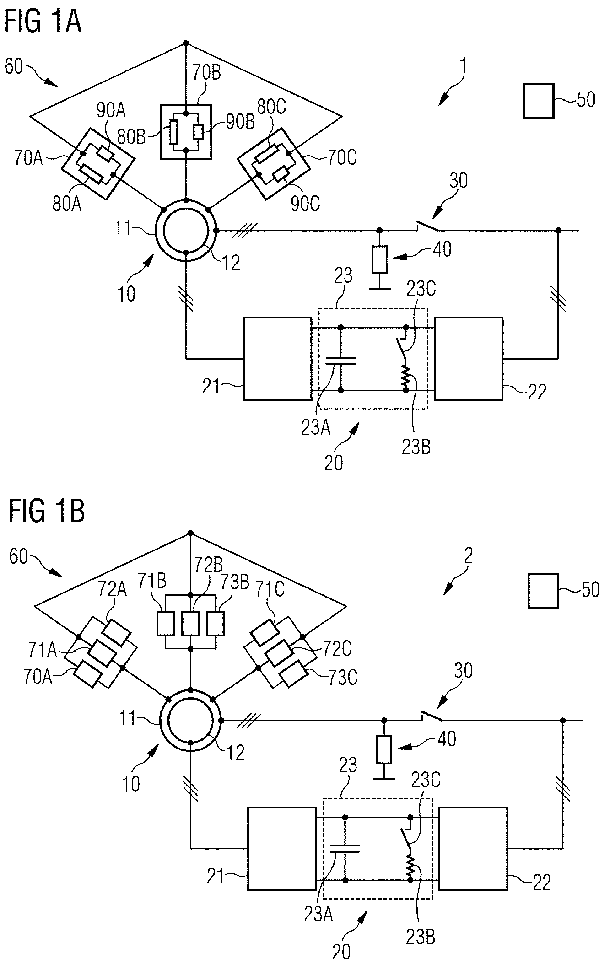

Figure 1A depicts part of a wind power facility 1, e.g. a wind turbine, according to an example. The wind power facility 1 may be configured to operate during grid faults such as grid loss.

The wind power facility 1 may comprise a Doubly-Fed Induction Generator (DFIG) 10 that may comprise a stator 11 and a rotor 12. The stator 11 may comprise at least one three-phase winding (not shown). In other examples, the stator 11 may comprise two or more three-phase winding. The wind power facility 1 may also comprise a plurality of blades (not shown) connected to the rotor via a hub in order to mechanically transmit the received wind power to be transformed it into electric power. The DFIG generator may be arranged in star connection.

The wind power facility 1 may further comprise a converter 20 which may comprise a Machine Side Converter (MSC) 21, a Grid Side Converter (GSC) 22 and a DC link 23 coupled therebetween. The DC link 23 may comprise a switch 23C in series with a resistor 23B. The switch 23C and the resistor 23B may be arranged in parallel to a capacitor 23A.

In an example, the capacitor 23A may be e.g. an electrolytic capacitor, having a capacitance order around e.g. dozens of mF. In an example, the resistor 23B may have a resistance of e.g. around 1 mQ, with a capacity of dissipating e.g. dozens of MJ.

In addition, the wind power facility 1 may comprise a short-circuit controlled switch 40. The short-circuit controlled switch 40 may comprise an end coupled to the stator and another end coupled to ground. The short-circuit controlled switch 40 may be configured to selectively short-circuit the stator. Therefore, upon closing the short-circuit controlled switch 40, the current may flow from the stator.

The short-circuit controlled switch 40 may comprise at least a controllable switch (not shown) configured to open/close the electric connection between the stator and the ground connection. The controllable switch may be an electromechanical switch, e.g. a contactor; or an electronic switch e.g. a thyristor, an Insulated Gate Bipolar Transistor (IGBT) or any other suitable device.

The wind power facility 1 may further comprise a controlled grid switch 30 for selectively coupling/decoupling at least the stator and the grid. That is, the controlled switch 30 may be configured to couple/decouple at least the stator from the grid e.g. upon detection of a grid fault. The controlled switch 30 may be directly or indirectly coupled to the stator, and may have an end coupled to grid. In the example of Figure 1A, the controlled grid switch 30 may comprise an end coupled to the stator and the other end coupled to the grid.

The short-circuit controlled switch 40 and the controlled grid switch 30 may be configured to be opened alternately, i.e. not simultaneously. That is, during normal operation the controlled grid switch 30 may be configured to be closed, and thus, the stator current can flow into the grid. The short-circuit controlled switch 40 may, during normal operation, be configured to be open.

In the event of a grid fault, i.e. upon detection of a grid event, the controlled grid switch 30 may be configured to be opened and the short-circuit controlled switch 40 may be configured to be closed. Thus, upon closing the short-circuit controlled switch 40, the controlled grid switch 30 may be opened.

The wind power facility 1 may further comprise a control system 50 which may be configured to manage and control the operation of the wind power facility 1. The control system 50 may send control signals e.g. wired or wirelessly, to the components of the wind power facility e.g. the converter. The control system may be configured to implement or carry out any method described herein e.g. it may be configured to control also the controlled grid switch 30, the short-circuit controlled switch 40 and any other additional switches and elements. The control system 50 may be the control system of the converter.

The DFIG wind power facility 1 may further comprise a braking system 60 that may comprise at least one brake chopper module (BCM) 70A-70C per phase. The at least one BCM 70A-70C may be configured to selectively allow current flow in two directions i.e. bidirectionally. The at least one BCM may comprise an impedance unit and, parallel thereto, a switching unit which may comprise at least an active element.

In examples wherein the wind power facility comprises more than one BCM, e.g. three BCMs as shown in Figure 1A, each BCM 70A-70C may be independently controlled, that is, the at least one active element of each switching unit may be independently varied. Therefore, the power dissipated by respective impedance unit may be different. A more effective and adaptable braking system 60 may thus be obtained.

In an example (see Figure 1A), the braking system 60 may be arranged at the stator neutral break point. In such examples, the generator may be arranged in star connection.

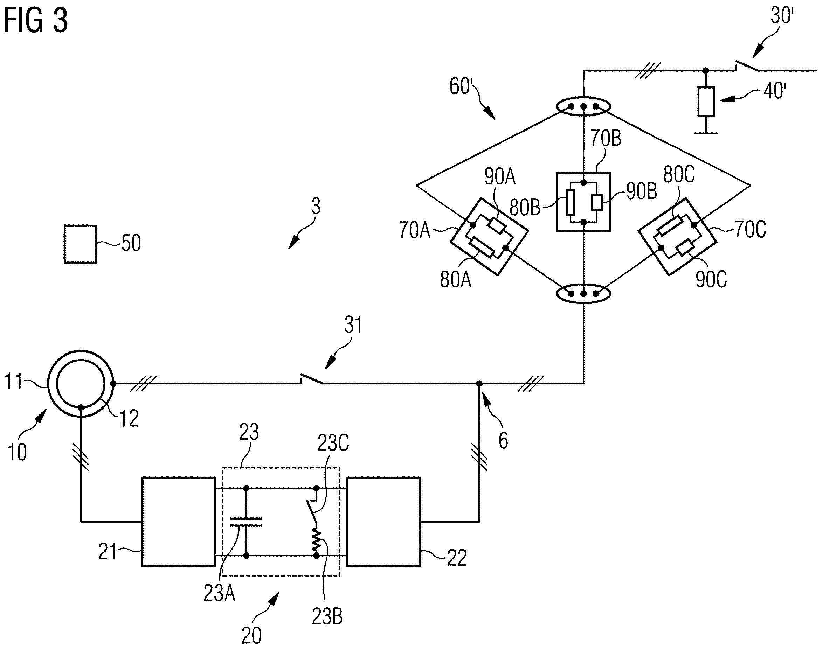

In another example (see Figure 3), the braking system may be arranged between the common coupling point (CCP) 6 and the load e.g. the electric grid.

The at least one BCM 70A-70C may comprise a switching unit 90A-90C and an impedance unit 80A-80C arranged in parallel thereto.

The impedance unit 80A-80C may be configured to a dissipate the energy produced in the stator e.g. during a grid fault, and therefore may enable a controlled shut down. Being able to slow down the wind power facility with power dissipation may prevent introducing high mechanical loads into the mechanic components thereby providing a controlled and safe shut down (without using mechanical braking).

The impedance unit 80A-80C may be e.g. a resistor, an inductor or any other any other suitable device. In some examples, the impedance unit 80A-80C may comprise a plurality of impedances arranged in series and/or in parallel.

The switching unit 90A-90C may comprise at least one active element. The at least one active element may be e.g. an IGBT, a RB-IGBT, a Si MOSFET, a SiC MOSFET, any other suitable element or a combination thereof. In an example, the at least one active element may be a high frequency switch.

In some examples, the switching unit 90A-90C may comprise two or more, i.e. a plurality, of active elements. In some examples, the switching unit 90A-90C may also comprise at least a passive element e.g. a diode, a RB diode, SiC diode, any other suitable element or a combination thereof.

The switching unit 90A-90C may be configured to vary the average value of the impedance unit by varying the duty cycle of the at least one active element. In cases wherein the switching unit 90A-90C comprises a plurality of active elements, the duty cycle of one or of all active elements may be varied.

The duty cycle of the at least one active element may be changed or adapted depending on e.g. the ongoing conditions in order to selectively set the power to be dissipated by the impedance unit. Thus, a more effective and adaptable braking system 60 may be obtained as it may be tuned according to the ongoing conditions.

In an example, the switching unit 90A-90C may comprise two sub-units (not shown) arranged in anti-series wherein each sub-unit may comprise an active element a passive element arranged in antiparallel.

In an example, the switching unit 90A-90C may comprise two sub-units (not shown) arranged in anti-parallel, wherein each sub-unit comprises a passive element and an active element in antiparallel, and a passive element in anti-series thereto.

In an example, the switching unit 90A-90C may comprise two active elements arranged in antiparallel.

In an example, the switching unit 90A-90C may comprise an active element and a passive element bridge circuit.

In an example, the switching unit 90A-90C may comprise two sub-units arranged in antiparallel wherein each sub-unit may comprise an active and a passive element arranged in antiparallel, and an active element in anti-series thereto.

Although Figure 1A depicts a DFIG wind power facility 1 comprising a single BCM per phase, the DFIG wind power facility may also comprise a plurality of, i.e. two or more, BSMs according to any of the disclosed examples, per phase. In such examples the two or more BCMs may be arranged in parallel and each BCM may be independently controlled thereby providing a more effective braking system as it may be more easily adapted to the ongoing operating circumstances.

Figure 1B depicts a wind power facility 2 comprising three BCMs per phase.

The number of BCMs may depend for example on the power level, that is, the number of BCMs may be proportional to the power level.

In each phase, the two or more BCMs may be identical i.e. may have same configuration, e.g. two active elements such as RB-IGBTs arranged in antiparallel; or may have different configurations.

In examples comprising two or more BCMs, the plurality of BCMs may be arranged therebetween in parallel.

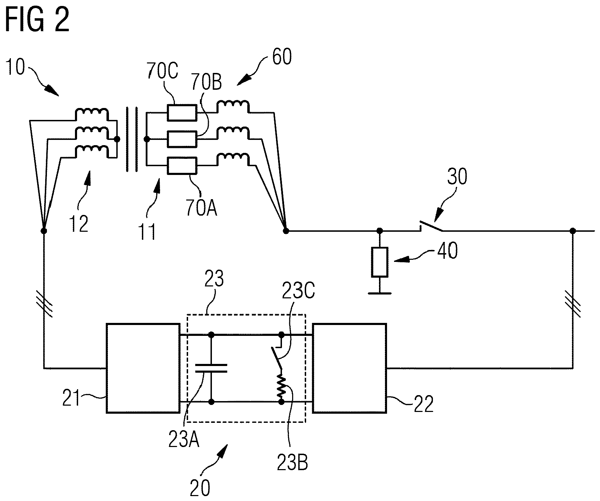

Figure 2 depicts in more detail the structure of the wind power facility of Figure 1A. Namely, Figure 2 depicts the stator windings and the connection of the BCMs thereto, which is not shown by Figure 1A.

In some examples, the braking system according to any of the disclosed examples may be arranged between the common coupling point (CCP) 6 and the grid. In such examples, the braking system may be arranged in series (see Figure 3) or in parallel (not shown).

In those examples, the short circuit controlled switch and the controlled grid switch according to any of the disclosed examples may be arranged between the braking system and the grid (see Figure 3).

Figure 3 depicts part of a wind power facility 3 comprising a braking system 60' according to any of the disclosed examples arranged in series between the common coupling point 6 and the grid. The wind power facility 3 may comprise a Doubly-Fed Induction Generator (DFIG) 10 comprising a stator 11 and a rotor 12, a converter 20 having a Machine Side Converter (MSC) 21, a Grid Side Converter (GSC) 22 and a DC link 23; and a control system 50 according to any of the examples disclosed.

The wind power facility 3 may comprise a short circuit controlled switch 40' and a controlled grid switch 30' arranged between the CCP6 and the grid.

The controlled grid switch 30' may selectively couple/decouple the wind power facility or at least the stator from the grid. In this example, the stator, the rotor and the braking circuit may be decoupled from the grid upon opening the controlled grid switch 30'.

The short circuit controlled switch 40' may, upon detecting a grid fault, short circuit the stator (and also the rotor) thereby allowing current flow at least through the stator and also through the impedance unit of the at least one BCM.

The converter 20 may be configured to manage the current flowing through the rotor during a grid fault e.g. it may function as a switch to disconnect the rotor from the grid.

Upon detection of a grid fault, the grid switch 30' may be opened and the short circuit controlled switch 40' may be closed, thereby at least the stator may be short-circuited (together with the rotor) and the current may flow through the stator and through the impedance unit of the at least one BCM. A controlled shut down may thus be obtained as energy from the stator may be dissipated in the impedance unit. Thus, the use of a mechanical braking system which suddenly stops the operation of the wind power facility may be avoided.

In examples (not shown) wherein the braking system 60' may be in shunt connection, i.e. in parallel; the braking system 60' may additionally comprise an activation switch per phase. The activation switch may be arranged in series with a respective BCM may be configured to, upon being closed, allow a current flow through respective the at least one BCM of respective phase thereby activating the at least one BCM of respective phase.

The activation switch may be a high frequency switch e.g. an IGBT, a SiC Mosfet or any other suitable device.

Besides, as shown in Figure 3, in examples wherein the braking system is arranged between the CCP 6 and the grid (either in series or in parallel), the wind power facility may comprise a stator switch 31 for selectively coupling/decoupling only the stator from the CCP. The stator switch 31 may be arranged between the stator 11 and the CCP 6.

The stator switch 31 may be configured to be opened to allow energizing the generator e.g. for the start-up of the wind power facility, e.g. by injecting power from the grid. During normal operation, the stator switch 31 may be configured to be closed.

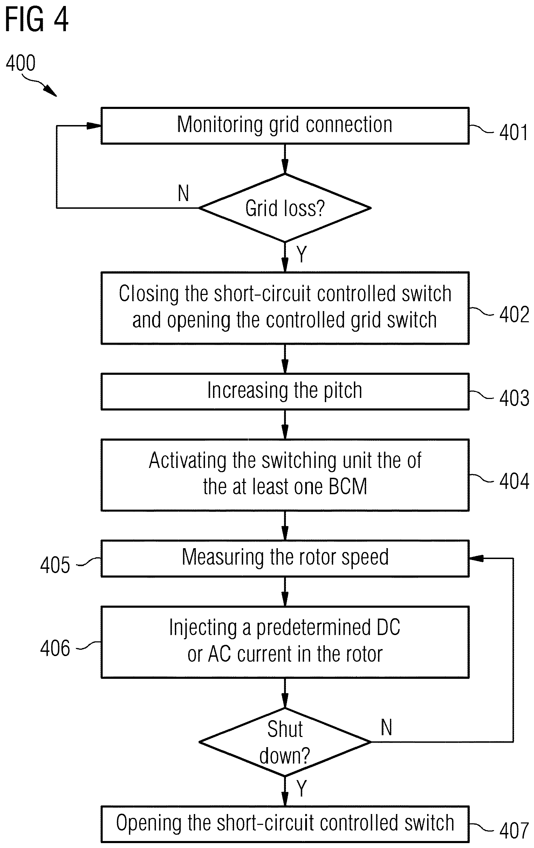

Figure 4 depicts a flow chart of a method 400 for shutting down a DFIG wind power facility according to any of the disclosed examples in case of a grid fault, e.g. a grid loss, in a controlled manner. The method 400 may be implemented by a DFIG wind power facility 1-3 according to any of the disclosed examples.

Firstly, the grid connection may, in block 401, be monitored. Such monitoring may be carried out at the CCP by e.g. the converter grid voltage controller or any other suitable device. In the event a grid loss is detected, the controlled grid switch may be opened and the short-circuit controlled switch may, in block 402, be closed, the current may therefore flow at least through the stator and through the impedance unit which enables power from the stator to be dissipated. The rotor speed may thus be progressively and/or gradually reduced without requiring sudden mechanical braking which introduces high mechanical loads.

The pitch of the plurality of blades may, in block 403, be increased e.g. up to a shutdown position, for instance to 90 degrees. Therefore, the wind power facility may decrease the rotation speed of the blades, i.e. of the rotor, progressively.

The switching unit of the at least one BCM may, in block 404, be activated i.e. the switching unit may selectively be switched on and off. In an example, the duty cycle of the switching unit, i.e. of the at least one active element; may be varied in order to adjust the amount of power dissipated by the impedance unit. In examples comprising more than one BCM, the duty cycle of each switching unit may be independently varied so that respective impedance units dissipate a respective power amount.

In examples wherein the braking system is arranged between the common coupling point and the grid in shunt connection, the activation switch(es) may be closed prior or simultaneously to the activation of the switching unit(s).

The rotor speed may then, in block 405, be measured. A predetermined DC or AC current may, in block 406, be injected into the rotor thereby adapting the rotor frequency. The predetermined current may depend on e.g. the generator speed, number of poles of the generator and/or generator rated frequency. In an example, almost a pure DC current may be injected. In another example, the predetermined current may be a combination of DC and AC currents within the operation rotor current limits.

The rotor speed may then be measured and, upon measuring a rotational rotor speed below a predetermined shutdown speed, e.g. about 50 - 100 rpm for a generator having a synchronous speed about 1500 rpm; the short-circuit controlled switch may, in block 407, be opened e.g. at a current close to zero.

The method 400 allows a secure shutdown of the wind power facility while also reducing the mechanical loads as the speed of the rotor may be gradually or progressively decreased i.e. avoiding the use of a braking system which introduces high mechanical loads into the wind power facility components.

The lifetime of the wind power facility may thus be extended, and the maintenance tasks reduced.

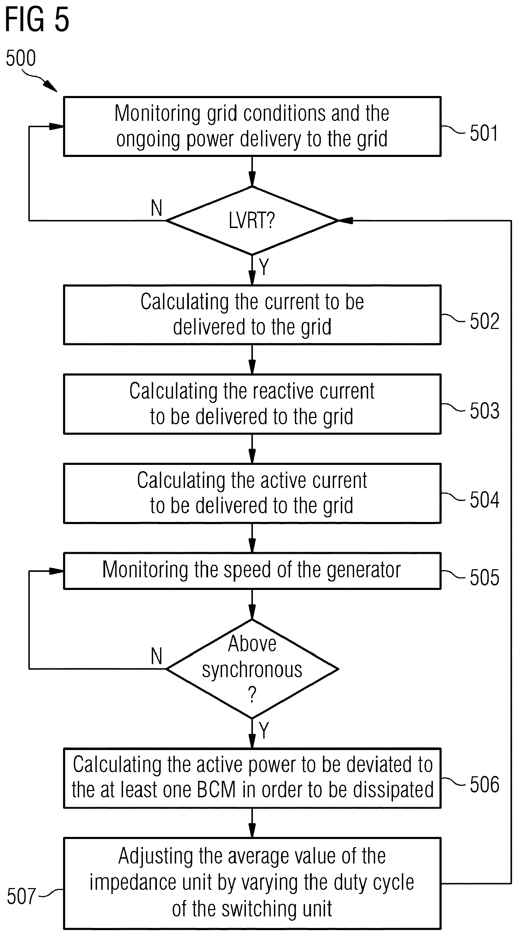

Figure 5 depicts a flow chart of a method 500 for operating a DFIG wind power facility according to any of the disclosed examples during a LVRT condition or event.

Firstly, the grid connection and the ongoing power delivery to the grid may, in block 501, be monitored. Such monitoring may be carried out at the CCP by e.g. converter grid voltage controller or any other suitable device. In the event of a Low Voltage Ride Through (LVRT) is detected, the current to be delivered to the grid may, in block 502, be calculated. The current to be delivered to the grid may depending on the depth of the ongoing LVRT.

On the contrary, in the event no LVRT is detected, the grid conditions may continue being monitored.

The reactive current to be delivered may, in block 503, be calculated. Then, the active current to be delivered may, in block 504, be calculated.

The generator speed may, in block 505, be measured or monitored in case the speed is below synchronous speed, the generator speed may continue to be measured, in block 505.

Otherwise, i.e. upon measuring a speed above synchronous speed, the active power to be deviated to the at least one BCM i.e. to be dissipated by the impedance unit may, in block 506, be calculated. That is, if the amount of power generated by the wind power facility exceed the amount the grid may receive, a portion of the generated amount may be dissipated at the impedance unit of the at least one BCM. In an example, the active power to be deviated to the at least one BCM may be calculated as the difference between the active power generated before the LVRT detection and the active power to be delivered to the grid.

The average value of the impedance unit may, in block 507, be adjusted by varying or modifying the duty cycle of the switching unit, i.e. of the at least one active element. The "extra" or the surplus active power may thus be effectively dissipated. The impedance unit may thus dissipate the calculated power.

By being able to vary the average value of the impedance unit of the BCM, the wind power facility may be adapted to the ongoing LVRT and its depth or length, and may effectively dissipate the required amount of active power.

In examples comprising two or more BCMs, the average value of each impedance unit may be independently adjusted or varied, e.g. by modifying the duty cycle of respective switching unit. The braking system is thus more flexible and adaptable.

Besides, in examples wherein the braking system is arranged between the CCP and the grid, the activation switch(es) may be closed prior or simultaneously to the activation of the switching unit(s).

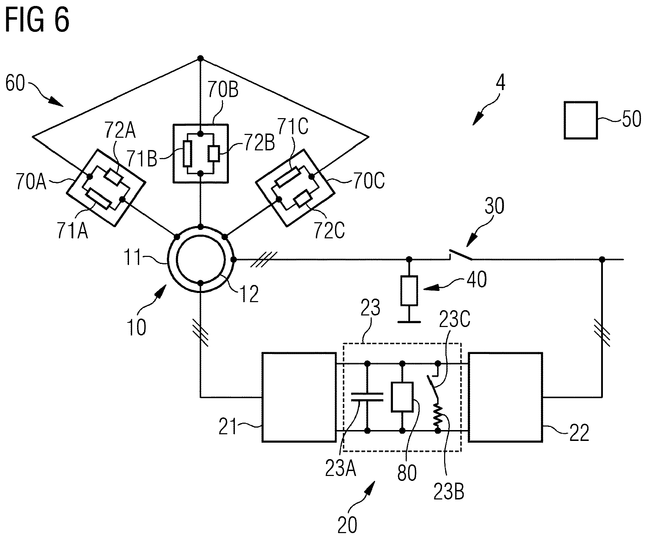

Figures 6 shows a DFIG wind power facility 4. The DFIG wind power facility 4 may be configured to operate during grid faults such as grid loss, voltage dip, voltage drop, Low Voltage Ride Through (LVRT), etc.

The DFIG wind power facility 4 may comprise all the features of the DFIG wind power facility 1, 2 according to any of the disclosed examples, i.e. a DFIG generator 10 comprising a rotor 12 and a stator 11, a converter 20 comprising a Machine Side Converter 21, a Grid Side Converter 22 and a DC link 23, a control system 50, a short-circuit controlled switch 40, a controlled grid switch 30 and a braking system 60 comprising at least one BCM 70A - 70C per phase.

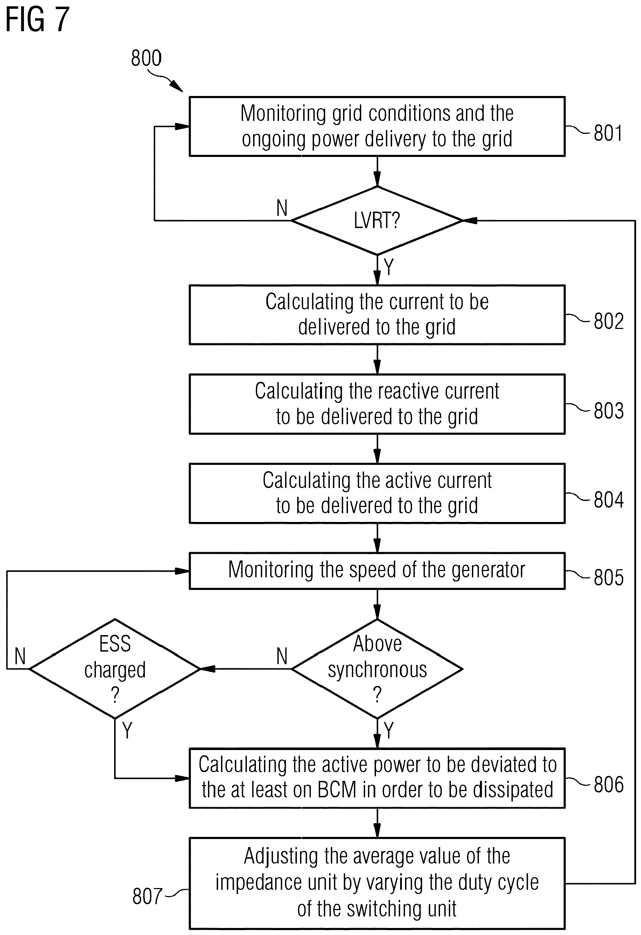

The DFIG wind power facility 5 may further comprise an Energy Storage System (ESS) 80 in the DC link 23. Such ESS 80 may be coupled directly to the DC link. In an example, the ESS 80 may be arranged in parallel to the DC link capacitor 23A. Figure 7 depicts a flow chart of a method 800 for operating the DFIG wind power facility 4 during Low Voltage Ride Through (LVRT) condition.

Firstly, the grid connection and the ongoing power delivery to the grid may, in block 801, be monitored. Such monitoring may be carried out at the CCP by e.g. the converter grid voltage controller or any other suitable device.

In the event of a LVRT is not detected, the grid conditions may continue being monitored.

On the contrary, i.e. in the event a LVRT is detected, the current to be delivered to the grid may, in block 802, be calculated. The current to be delivered to the grid may depending on the depth of the ongoing LVRT.

The reactive current to be delivered may, in block 803, be calculated. Then, the active current to be delivered to the grid may, in block 804, be calculated.

The generator speed may, in block 805, be measured. Upon measuring a speed above synchronous speed, the active power to be deviated to the at least one BCM, i.e. to be dissipated by the impedance unit may, in block 806, be calculated. That is, if the amount of power generated by the wind power facility exceed the amount the grid may receive, a portion of the generated amount may be dissipated at the impedance unit. In an example, the active power to be deviated to the at least one BCM may be calculated as the difference between the active power generated before the LVRT detection and the active power to be delivered to the grid.

In the event the generator speed is not above synchronous speed, availability of the ESS may be checked i.e. check whether the ESS is charged. In case the wind power facility comprises charged ESS, the method may continue in block 806. Otherwise, the generator speed may, in block 805, be monitored.

Then, average value of the impedance unit may, in block 807, be adjusted e.g. by varying or modifying the duty cycle of the switching unit, i.e. of the at least one active element. The "extra" or the surplus active power may thus be effectively dissipated. By being able to vary the average value of the impedance unit the of the BCM may be adapted to the ongoing LVRT and its value, and may effectively dissipate the required amount of active power. In examples comprising two or more BCMs, the average value of each impedance unit may be independently adjusted or varied, e.g. by modifying the duty cycle of respective switching unit. The braking system is thus more flexible and adaptable.

The use of an ESS enables the wind power facility to operate during a LVRT below synchronous speed which allows improving the LVRT events along all the power curve of the wind power facility.

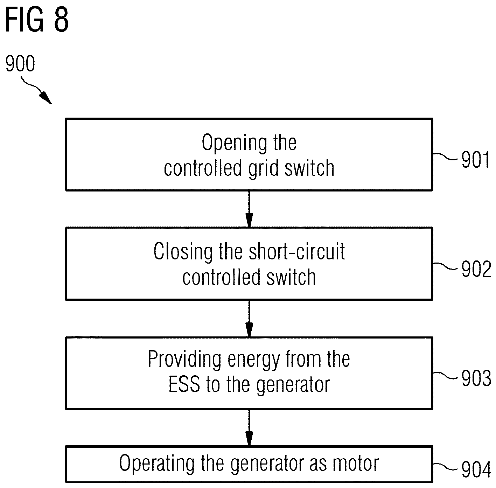

Figure 8 depicts a flow chart of a method 900 to operate a DFIG wind power facility 4 according to any of the disclosed examples as a motor.

Firstly, the controlled grid switch may, in block 901, be opened thereby decoupling at least the stator from the grid. The controlled grid switch may, in block 902, be closed. Thus, the stator may be short-circuited thereby enabling the current flow through the stator. In some examples, the entire wind turbine may be disconnected from the grid.

Energy from the Energy Storage System (ESS) may then, in block 903, be provided to the generator in order to energize it and enabling it to function as motor. The ESS may be precharged or may be charged prior to a grid loss e.g. during the normal operation of the wind power facility.

The DFIG wind power facility may, in block 904, operate the generator as motor wherein the Machine Side Converter may supply the energy, i.e. similarly to a motor drive.

By being able to implement method 900, the wind power facility may, in absence of grid or in grid loss condition, enable maintenance tasks to be performed and/or may aid the wind power facility erection operation as the generator may function as motor independently from external influences such as wind condition or presence of grid.

While specific embodiments are disclosed herein, various changes and modifications can be made without departing from the scope of the invention. The present embodiments are to be considered in all respects as illustrative and nonrestrictive, and all changes coming within the meaning and equivalency range of the appended claims are intended to be embraced therein.

### CLAUSES

For reasons of completeness, various aspects of the invention are set out in the following clauses:
Clause 1. A method for operating a DFIG wind power facility during LVRT condition, the DFIG wind power facility comprising,
   a Doubly-Fed Induction Generator (DFIG) comprising a rotor and a stator, wherein the stator comprises at least one three-phase winding;
   a control system configured to manage the operation of the DFIG wind power facility;
   an electric converter comprising a Machine Side Converter (MSC), a Grid Side Converter (GSC) and a DC link connected therebetween;
   a controlled grid switch for selectively coupling/decoupling at least the stator and the grid;
   a braking comprising at least one brake chopper module (BCM) per phase, the at least one BCM configured to selectively allow current flow bidirectionally, and wherein the BCM comprises an impedance unit and a switching unit connected in parallel thereto, the switching unit being configured to vary the average value of the impedance unit; and
   a short-circuit controlled switch configured to, upon detecting a grid fault, selectively short-circuit at least the stator thereby allowing current to flow at least through the stator and the impedance unit of the at least one BCM during the grid fault, the method comprising:
      monitoring the grid connection and the ongoing power delivery to the grid;
      calculating the current to be delivered to the grid, upon detection of a Low Voltage Ride Through;
      calculating the reactive current to be delivered to the grid;
      calculating the active current to be delivered to the grid;
      monitoring the speed of the generator;
      calculating the active power to be deviated to the at least one BCM in order to be dissipated, upon measuring a generator speed above synchronous speed; and
      adjusting the average value of the impedance unit by varying the duty cycle of the switching unit.
Clause 2. A method for operating a DFIG wind power facility during a LVRT condition, the DFIG wind power facility comprising,
   a Doubly-Fed Induction Generator (DFIG) comprising a rotor and a stator, wherein the stator comprises at least one three-phase winding;
   a control system configured to manage the operation of the DFIG wind power facility;
   an electric converter comprising a Machine Side Converter (MSC), a Grid Side Converter (GSC) and a DC link connected therebetween;
   a controlled grid switch for selectively coupling/decoupling at least the stator and the grid;
   a braking system comprising at least one brake chopper module (BCM) per phase, the at least one BCM configured to selectively allow current flow bidirectionally, and wherein the BCM comprises an impedance unit and a switching unit connected in parallel thereto, the switching unit being configured to vary the average value of the impedance unit;
   a short-circuit controlled switch configured to, upon detecting a grid fault, selectively short-circuit at least the stator thereby allowing current to flow at least through the stator and the impedance unit of the at least one BCM during the grid fault; and
   an Energy Storage System (ESS) in the DC link, the method comprising:
      monitoring grid conditions and the ongoing power delivery to the grid;
      calculating the current to be delivered to the grid upon detection of a LVRT condition;
      calculating the reactive current to be delivered to the grid;
      calculating the active current to be delivered to the grid;
      monitoring the speed of the generator;
      calculating the active power to be deviated to the at least one BCM in order to dissipate upon measuring a generator speed above synchronous speed; and adjusting the average value of the impedance unit by varying the duty cycle of the switching unit.
Clause 3. The method according to clause 2, further comprising, prior to calculating the active power to be deviated to the at least one BCM:
   checking whether the ESS are charged, in the event the generator speed is below synchronous speed.
Clause 4. A method for operating a DFIG wind power facility as motor, the DFIG wind power facility comprising,
   a Doubly-Fed Induction Generator (DFIG) in star connection comprising a rotor and a stator, wherein the stator comprises at least one three-phase winding;
   a control system configured to manage the operation of the DFIG wind power facility;
   an electric converter comprising a Machine Side Converter (MSC), a Grid Side Converter (GSC) and a DC link connected therebetween;
   a controlled grid switch for selectively coupling/decoupling at least the stator and the grid;
   a braking system comprising at least one brake chopper module (BCM) per phase, the at least one BCM configured to selectively allow current flow bidirectionally, and
   wherein the BCM comprises an impedance unit and a switching unit connected in parallel thereto, the switching unit being configured to vary the average value of the impedance unit;
   a short-circuit controlled switch configured to, upon detecting a grid fault, selectively short-circuit at least the stator thereby allowing current to flow at least through the stator and the impedance unit of the at least one BCM during the grid fault; and
   an Energy Storage System (ESS) in the DC link, the method comprising:
   opening controlled grid switch for decoupling at least the stator from the grid;
   closing the short-circuit controlled switch;
   providing energy from the ESS to the generator; and operating the generator as motor.

## Claims

1. A DFIG wind power facility configured to operate during grid faults, the DFIG wind power facility comprising:
a Doubly-Fed Induction Generator (DFIG) comprising a rotor and a stator, wherein the stator comprises at least one three-phase winding;
a control system configured to manage the operation of the DFIG wind power facility;
an electric converter comprising a Machine Side Converter (MSC), a Grid Side Converter (GSC) and a DC link connected therebetween;
a controlled grid switch for selectively coupling/decoupling at least the stator and the grid;
a braking system comprising at least one brake chopper module (BCM) per phase, the at least one BCM configured to selectively allow current flow bidirectionally, and wherein the at least one BCM comprises an impedance unit and a switching unit connected in parallel thereto, the switching unit being configured to vary the average value of the impedance unit; and
a short-circuit controlled switch configured to, upon detecting a grid fault, selectively short-circuit at least the stator thereby allowing current to flow at least through the stator and the impedance unit of the at least one BCM during the grid fault.

2. The DFIG wind power facility according to claim 1, wherein the short-circuit controlled switch is an electromechanical switch or an electronic switch.

3. The DFIG wind power facility according to claim 1 or 2, wherein the switching unit comprises at least one active element.

4. The DFIG wind power facility according to claim 3, wherein the active element is selected among any of: an IGBT, a RB-IGBT, a Si MOSFET or a SiC MOSFET.

5. The DFIG wind power facility according to claim 2 or 3, wherein the switching unit comprises a passive element.

6. The DFIG wind power facility according to claim 5, wherein the passive element is a diode, a RB diode, SiC diode or any other suitable element.

7. The DFIG wind power facility according to any of claims 1 to 6, further comprising two or more BCMs per phase, the two or more BCMs being connected in parallel therebetween.

8. The DFIG wind power facility according to any of claims 1 to 7, wherein the braking system is arranged at the stator neutral point and the generator is in star connection.

9. The DFIG wind power facility according to any of claims 1 to 7, wherein the braking system is arranged between the common coupling point and the grid.

10. The DFIG wind power facility according to claim 9, further comprising a stator switch arranged between the stator and the common coupling point, to selectively disconnect the stator from the common coupling point.

11. The DFIG wind power facility according to claim 9 or 10, wherein the braking system is arranged in series.

12. The DFIG wind power facility according to claim 9 or 10, wherein the braking system is arranged in parallel and the braking system further comprises an activation switch per phase.

13. The DFIG wind power facility according to any of claims 1 - 9, further comprising an Energy Storage System (ESS) in the DC link.

14. The DFIG wind power facility according to claim 13, wherein the ESS is connected parallel to the DC link capacitor.

15. A method for operating a wind power facility according to any of claims 1 - 14 during grid faults, wherein the DFIG wind power facility further comprises a plurality of blades, the method comprising:
monitoring the grid connection,
closing the short-circuit controlled switch and opening the controlled grid switch thereby decoupling at least the stator from the grid upon detecting a grid loss;
increasing the pitch of the plurality of blades for gradually reducing the rotational speed of the rotor;
activating the switching unit of the at least one BCM;
measuring the rotational speed of the rotor;
injecting a predetermined DC or AC current in the rotor for adapting the rotor frequency; and
opening the short-circuit controlled switch upon measuring a rotational speed of the rotor below a predetermined shutdown speed thereby allowing a controlled shutting down the wind power facility.
